(19) Europäisches Patentamt / European Patent Office / Office européen des brevets

(11) **EP 4 336 279 A1**

(12) **EUROPEAN PATENT APPLICATION**

(43) Date of publication:
**13.03.2024 Bulletin 2024/11**

(21) Application number: **22195191.6**

(22) Date of filing: **12.09.2022**

(51) International Patent Classification (IPC):
**G05B 13/02** $^{(2006.01)}$ **G05B 13/04** $^{(2006.01)}$

(52) Cooperative Patent Classification (CPC):
**G05B 13/048; G05B 13/0265**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Patel, Kanil**
**70435 Stuttgart (DE)**
• **Reeb, Davi**
**71272 Renningen (DE)**
• **Gerwinn, Sebastian**
**71229 Leonberg (DE)**
• **Schiegg, Martin**
**70825 Korntal-Muenchingen (DE)**
• **Barsim, Karim Said Mahmoud**
**70372 Stuttgart (DE)**

(54) **METHOD FOR VALIDATING OR VERIFYING A TECHNICAL SYSTEM**

(57) Method for verifying and/or validating whether a technical system (40) fulfills a desired criterion, wherein the technical system (40) emits output signals based on input signals supplied to the technical system (40), wherein the method comprises the steps of:

a. Obtaining models ($M^1, M^2, M^C$) for a plurality of components ($S^1, S^2, S^C$) comprised by the technical system (40), wherein a connection between the obtained models characterizes which component passes which signal to which other component;

b. Obtaining a plurality of validation measurements, wherein a validation measurement comprises a measurement input and a measurement output ($p^1, p^2, p^{C-1}, p^C$), wherein the measurement output is obtained from a component ($S^1, S^2, S^C$) of the technical system (40) for the measurement input if the measurement input is provided to the component ($S^1, S^2, S^C$);

c. For each component ($S^1, S^2, S^C$), training a machine learning model ($V^1, V^2, V^C$) to predict measurement outputs ($p^1, p^2, p^{C-1}, p^C$) of the respective component ($S^1, S^2, S^C$) based on inputs of the respective component, wherein at least parts of the validation measurements are used as training dataset and wherein the machine learning model ($V^1, V^2, V^C$) corresponds to the model ($M^1, M^2, M^C$) obtained for the component;

d. Obtaining first test outputs ($q^{M,C}$) from a last model ($M^C$) based on test inputs ($q°$), wherein the first test outputs ($q^{M,C}$) are obtained by propagating the test inputs ($q°$) through the connection of models;

e. Determining, second test outputs ($q^{V,C}$) from the machine learning model ($V^C$) corresponding to the last model and based on the test inputs ($q^0$) of the models ($M^1, M^2, M^C$), wherein the second test outputs ($q^{V,C}$) are obtained by propagating the test inputs ($q^0$) through a connection of the machine learning models ($V^1, V^2, V^C$), wherein the connection of the machine learning models ($V^1, V^2, V^C$) is according to the connection of the models ($M^1, M^2, M^C$) the respective machine learning models ($V^1, V^2, V^C$) correspond to;

f. Determining a discrepancy (d), wherein the discrepancy (d) characterizes a difference between a distribution of first test outputs ($q^{M,C}$) determined from the last model ($M^C$) and a distribution of second test outputs ($q^{V,C}$) determined by the machine learning model ($V^C$) corresponding to the last model ($M^C$);

g. Verifying and/or validating whether the technical system (40) fulfills the criterion, wherein verifying and/or validating is characterized by maximizing a probability of a distribution of measurement outputs ($p^C$) of a last component ($S^C$) of the technical system (40) to not fulfill the criterion with respect to the distribution of measurement outputs ($p^C$) and under a constraint stipulating that a discrepancy of the distribution of measurement outputs ($p^C$) and the distribution of first test outputs ($q^{M,C}$) may not exceed the discrepancy (d) determined in step f.

Fig. 1

EP 4 336 279 A1

## Description

Technical field

The invention concerns a computer-implemented method for validating or verifying a technical system, a computer program, and a machine-readable storage medium.

Prior art

Shalev-Shwartz et al. 2018, "On a Formal Model of Safe and Scalable Self-driving Cars", https://arxiv.org/pdf/1708.06374.pdf discloses a mathematical model for safety assurance.

Danquah et al. 2021, "Statistical Validation Framework for Automotive Vehicle Simulations Using Uncertainty Learning", https://doi.org/10.3390/app11051983 discloses a statistical validation framework for dynamic systems with changing parameter configurations.

Jiang et al. 2021, "Assessing Generalization of SGD via Disagreement", Published at ICLR 2022, https://arxiv.org/abs/2106.13799 empirically shows that the test error of deep networks can be estimated by simply training the same architecture on the same training set but with a different run of Stochastic Gradient Descent.

Technical background

A technical system comprises components, wherein the system can be understood to define interactions and/or interrelations between the components.

For example, a control system of a robot such as an autonomous vehicle typically comprises components for sensing an environment of the robot, for planning actions of the robot in such an environment and for determining control signals to actuators of the robot to execute the planned actions.

Modern technical systems typically comprise a considerable number of components which in turn can make it very hard to predict the behavior of such a system. Given the aforementioned example, the components for sensing the environment may make mistakes in the sensing process, e.g., miss objects in the environment, the planning components may be faced with a sensed environment for which no suitable actions are known in the planning components or there may be discrepancies between the planned actions and the actions actually carried out by the robot.

In general, it is very hard to verify and/or validate that a technical system exhibits a desired behavior in its environment, let alone guarantee such a desired behavior. A main reason for this is that the components comprised by the system may in themselves exhibit unknown and/or stochastic behavior and/or may be so complex that they can only be treated as black boxes. For example, modern environment perception components of robots typically rely on methods from the field of machine learning, in particular deep learning methods, for sensing an environment. Such methods are inherently statistical, and their complexity typically does not allow for a straightforward approach for determining the exact behavior of the perception system.

Even beyond that, components of a system themselves may be systems, i.e., the system may be a system of systems. In such systems of systems, complexity grows quite rapidly which in turn makes it very hard to accurately predict the behavior of such a system of systems, i.e., verify and/or validate that the system behaves as required or desired.

Advantageously, the proposed invention allows for verifying and/or validating a technical system even if the technical system is complex, e.g., even if the technical system comprises a plurality of components that are intricately linked together.

Disclosure of the invention

In a first aspect, the invention concerns a Method for verifying and/or validating whether a technical system fulfills a desired criterion, wherein the technical system emits output signals based on input signals supplied to the technical system, wherein the method comprises the steps of:

a. Obtaining models for a plurality of components comprised by the technical system, wherein a connection between the obtained models characterizes which component passes which signal to which other component;

b. Obtaining a plurality of validation measurements, wherein a validation measurement comprises a measurement input and a measurement output, wherein the measurement output is obtained from a component of the technical system for the measurement input if the measurement input is provided to the component;

c. For each component, training a machine learning model to predict measurement outputs of the respective component based on inputs of the respective component, wherein at least parts of the validation measurements are used as training dataset and wherein the machine learning model corresponds to the model obtained for the component;

d. Obtaining first test outputs from a last model based on test inputs, wherein the first test outputs are obtained by propagating the test inputs through the connection of models;

e. Determining, second test outputs from the machine learning model corresponding to the last model and based on the test inputs of the models, wherein the second test outputs are obtained by propagating the test inputs through a connection of the machine learning models, wherein the connection of the machine learning models is according to the connection of the models the respective machine learning models correspond to;

f. Determine a discrepancy, wherein the discrepancy characterizes a difference between a distribution of first test outputs determined from the last model and a distribution of second test outputs determined by the machine learning model corresponding to the last model;

g. Verifying and/or validating whether the technical system fulfills the criterion, wherein verifying and/or validating is characterized by maximizing a probability of a distribution of measurement outputs of a last component of the technical system to not fulfill the criterion with respect to the distribution of measurement outputs and under a constrained stipulating that a discrepancy of the distribution of measurement outputs and the distribution of first test outputs may not exceed the discrepancy determined in step f.

In general, the purpose of a method for verifying and/or validating a technical system may be understood as aiding a user of the method in determining a probability of the technical system to fulfill the desired criterion. The determined probability could then be compared to a probability threshold and the technical system could be considered as verified and/or validated with respect to the criterion if the probability of fulfilling the desired criterion is equal to or above the probability threshold. If the determined probability does not reach or exceed the probability threshold, the criterion can be considered to not be able to be verified or not be able to be validated. For example, the technical system could be a mobile robot and the criterion could be phrased as "the robot does not deviate from a desired path of the robot by more than 50cm". The method would then allow for statistically assessing a probability of the criterion to be fulfilled.

Alternatively, the method could also be used to determine a probability for violating the desired criterion. In this case, the criterion could be considered to be verified and/or validated of the determined probability is equal to or below the probability threshold.

In some embodiments, the desired criterion may be a requirement or a plurality of requirements with respect to some specification, e.g., design specification or legal specification. For example, it may be a requirement for a powertrain (i.e., the technical system) of a vehicle comprising an internal combustion engine to only produce a specified amount of emission particles (e.g., the number of NOx particles must be below a predefined threshold) for a predefined time of operation. In this particular case, the method may aid a validation engineer to determine a probability for the powertrain to actually operate in accordance with the specified amount of emissions.

The probability threshold may be chosen in accordance with a specification of the system. Alternatively, the probability threshold may also be given by or derived from legal stipulations.

In general, the method may be used for any system comprising components or sub-systems. For all such systems, the method allows for a guided process. As verification and/or validation is typically an integral building block with respect to releasing a system under development, the system may for example be released if the criterion is verified and/or validated to be fulfilled. Alternatively, the method may be used to verify and/or validate multiple criteria and the system may be released if all criteria are verified and/or validated to be fulfilled. Alternatively, the method may be a part of a larger test strategy for assessing whether the system may be released. In all embodiments discussed above, the system may for example not be released if a criterion or multiple criteria cannot be verified and/or validated. In such cases, components of the technical system may be improved, and the method may be run again after improvement of the components to verify and/or validate the improved system with respect to the criterion or the criteria. For example, in the embodiment from above, the engine may be limited in its power in order to reduce the amount of emitted particles and/or components of the powertrain may be exchanged for more efficient components with respect to the emitted particles.

In other words, the method can be understood as a human-machine guided process for assessing whether a certain criterion can be expected to be fulfilled when using the system in the real world.

The technical system interacts with the real world by means of determining the output signal based on an input signal. In the exemplary embodiment from above, the powertrain may for example be equipped with sensors for measuring a temperature of an environment of the powertrain and may control the engine and/or parts of an after-treatment of exhaust gas, e.g., a catalyst, accordingly. However, the input signals to the system do not necessarily need to be input into the technical system by means of a sensor or communication device. The input signals may, for example, also characterize environment conditions of the technical system that have an influence on the operation of the technical system. For example, the amount of emissions produced by an internal combustion engine typically depends on a temperature of the environment of the internal combustion engine. In such an embodiment, the temperature could be considered an input signal of the technical system even though the engine does not receive temperature information by means of a sensor or communication device. In other words, the temperature has a physical impact on the engine without the engine measuring the temperature. The input signal may hence also be understood as an input stimulus.

The different components of the technical system may hence be connected by means of an exchange of information through, e.g., signals (e.g., measurement data, control signals) and/or by means of physical interaction (e.g., processing of exhaust gas).

Generally, a technical system as described in this invention may be quite complex, e.g., in the way components of the technical system interact with each other and/or complex with respect to the individual components of the technical system, which may make it very hard to accurately assess the behavior of the technical system with respect to different environment situations and such different input signals of the technical system. With known methods, the only way to assess the behavior of such a technical system is typically to treat the technical system as a black box with respect to its input-output behavior, run the technical system in the real world to collect data about the input-output behavior and use statistical methods to deduct information about the input-output behavior. This may also be understood as gathering data to predict an input-output behavior of the technical system. However, the main drawback of such approaches is that typically a large amount of data needs to be collected to accurately assess the input-output behavior. Especially for safety critical systems and/or technical systems that are bound to some form of legal provision with respect to its input-output behavior (e.g., only a maximum number of allowed emitted particles over a certain time of operation) collecting such data to accurately predict the input-output behavior requires an excessive test or validation campaign which often is infeasible due to the vast amount of data necessary to collect.

Advantageously, the proposed method allows for vastly reducing the actual amount of real-world data that needs to be collected while still being able to accurately assess an input-output behavior of the technical system. In particular, the method allows for verification and/or validation of a technical system without the need for end-to-end data (black box), but rather only component-level data; thus, verification and/or validation may be performed during the design of the technical system, even before the full technical system has been assembled.

It may also be possible to use the proposed method for deciding on components of the technical system. For example, there may exist different types of components that could plausible be used in the technical system (e.g., different types of catalysts in the example of the powertrain). For each such component, a dedicated model may be used and the fulfillment of the criterion could be evaluated for all such possible and feasible combinations of components. Then, for example, the configuration of components resulting in a best probability could be used as design specification for building the technical system.

From an abstract point of view, the method may be understood in so far as that a model of the technical system is constructed by means of modelling the different components of the technical system through different models as well as machine learning models and then being able to simulate the behavior of the technical system by means of the model. Advantageously, the behavior of the technical system can be simulated by means of the models as well as the machine learning models.

The inventors found that a difference between outputs, i.e., between first outputs determined from the models and second outputs determined from the machine learning models, can favorably be used to heuristically determine an upper bound for a difference of outputs obtained by the technical system and the first outputs. The upper bound can in turn be used to determine an upper bound for the criterion to be failed by outputs of the technical system.

In the following, reference is made to models as well as machine learning models. In such cases, the term model refers to a model of a component, preferably a physical model, however, statistical models for components could reasonably be used when referring to models as well. The term "machine learning system" refers to statistical models preferably determined by means of a supervised training using input and output data of a component as training data. In the method, it is possible if a model is a statistical model then its corresponding machine learning model may be the same statistical model. This may especially be the case if the component corresponding to the model is the statistical model. For example, the technical system could be a robot using a perception pipeline for determining its surroundings, wherein a neural network is used for determining objects in a vicinity of the robot. The neural network may be understood as a component of the technical system, wherein the neural network itself can also be used as model and as machine learning model.

In a first step, models for the components of the technical system are obtained. A model may be a physical model. In the example from above, the engine of the powertrain (the powertrain being the technical system, the engine being a component of the technical system) may be modelled by a physical model of the engine. Alternatively, a model may be given by the component itself (see example of the neural network from above).

Advantageously, a modelling granularity may be chosen at the user's discretion. That is, the detail of the models (and consequently a detail of the machine learning models) may be chosen at the user's discretion. For example, the user may determine whether to model the component of an engine as a single model or to apply a fine-grained modelling, e.g., by modelling fuel injection behavior, combustion behavior, and/or mechanical properties of parts of the engine such as the pistons, the valves, and the crankshaft.

In other words, the method is agnostic to the level of modelling (coarse grained, fine grained or anything in between) of the components.

In a second step, validation measurements are obtained for the components of the technical system. In the context of the method, validation measurements are understood as pairs of a measurement input and a measurement output, wherein a measurement output is obtained if a component is provided the measurement input. In other words, measurement outputs are linked to components. A measurement output of a first component may be provided as measurement input to a second component. An input of the technical system may also be used as measurement input to one or multiple components of the technical system. Advantageously, the validation measurement for each component of the technical system may be obtained by running and measuring the respective component in isolation, e.g., on a test bench. If the overall technical system is already assembled and/or available to be run, the validation measurements may also be obtained by running one or multiple test runs (sometimes also referred to as validation runs) of the technical system in the real world and measuring the respective measurement inputs and measurement outputs of each component.

In a third step, the validation measurements are used to train the machine learning models. For this, the measurement inputs and measurement outputs of each component may be used to train a machine learning model. This can be understood as supervised training with the measurement inputs of the component serving as independent variable and the measurement outputs of the component serving as dependent variable.

In preferred embodiments, at least one of the machine learning models is or comprises a Gaussian process. If the machine learning model comprises a Gaussian process, the machine learning model may comprise other elements, e.g., preprocessing or postprocessing elements, for determining an output of the machine learning model. The machine learning model my especially be configured for Gaussian process regression or Gaussian process classification depending on the type of data put out by the component. If the component has time-series as inputs and outputs, one can construct such time-series models by a suitable combination of Gaussian Processes as well (e.g., GP-NARX).

In a fourth and fifth step, the models are then used to determine first test outputs and the machine learning models are used to determine second test outputs. This is achieved by means of propagating information through a connection of models and a connection of machine learning models respectively. The respective connections are derived from the components of the technical system. The components in the technical system are (logically) connected based on which component provides input to which other component. The connection may characterize actual signals passed between components as well as stimuli passed between components. As models as well as machine learning models correspond to a single component by means of a 1-to-1 relationship, the connections of the components can also be used as connections between the models and as connections between the machine learning models. The models hence form a chain defining a flow of information from a first model to a last model of the chain. This flow of information models the flow of information as would happen in the technical system itself. Likewise, the machine learning models form a chain, wherein this chain defines a different model of the flow of information in the technical system. A test input may hence be propagated through the chain of models and the chain of machine learning models respectively in order to predict a respective result as would have been the result if the test input was provided to the technical system itself (or had occurred as stimulus for the technical system).

The first test outputs are obtained from a last model of the chain of models. Likewise, the second test outputs are obtained from the machine learning model corresponding to the last model. The qualifier first and second simply denote correspondence to either the last model (first) or the machine learning model (second) corresponding to the last model.

In the method, the models and machine learning models are preferably provided with a plurality of test inputs to determine a plurality of first test outputs and a plurality of second test outputs. Test inputs may preferably be obtained by synthesizing the desired data. For example, the validation measurements can be used to train a generative machine learning model such as a generative adversarial network, a normalizing flow, or a diffusion model. The trained model may then be sampled from to determine the test inputs. This way, the amount of data for verifying and/or validating the technical system can easily be improved without the need for gathering data in the real world. However, real-world data can also be used as test inputs, either in combination with synthetic data or standalone.

The pairs of test inputs and test outputs may be considered counterparts to measurement inputs and measurement outputs. Where measurement inputs and measurement outputs are linked to the components of the technical system, test inputs and test outputs are linked to the models or machine learning models.

When forwarding data through the machine learning models, each model or machine learning model may predict a plurality of outputs for a given test input, wherein this plurality of outputs is then provided to another machine learning model. This way, the amount of data is further increased and the verification and/or validation result is even more reliable.

In a sixth step, a discrepancy between a distribution of first test outputs from the last model and distribution of second test outputs from the machine learning model corresponding to the model is determined. This can be understood as determining how much the models' predictions agree with the machine learning models' predictions. For determining a discrepancy, a same plurality of test inputs may be propagated through the models and propagated through the machine learning models. For this plurality of test inputs, a first plurality of test outputs and a second plurality of test outputs may hence be determined, the first plurality by the models, the second plurality by the machine learning models. Treating test inputs as a random variable, the forwarding results in a distribution of first test outputs and a distribution of second test outputs. The resulting discrepancy can then be considered as how much models and machine learning models agree in their assessment concerning a predicted behavior of the technical system if supplied the test inputs as measurement inputs.

Surprisingly, the authors found that this discrepancy can advantageously be viewed as an upper bound on a discrepancy of a distribution of measurement outputs of a last component of the technical system and the distribution of first test outputs. This can be used advantageously to then determine the verification and/or validation results as described below.

A discrepancy between two distributions may be understood as a result of a function (also referred to as discrepancy measure) that maps the two probability distributions (defined on the same space) to a real number. A discrepancy may be understood as quantifying how close a first probability distribution is to a second probability distribution although technically, this does not need to be the case. In particular, a discrepancy does not need to be positively oriented, does not need to be positive definite, does not need to be symmetric and/or does not need satisfy the triangle inequality.

Examples of functions used to determine a discrepancy are:

- the maximum mean discrepancy (MMD) - or its square - between the distributions with respect to a kernel function on the underlying space of the distributions;
- the cosine similarity with respect to a kernel function on the underlying space of the distributions;
- the Wasserstein distance with respect to a distance measure on the underlying space of the distributions;
- a norm distance between the two distributions coming from any norm, such as the total-variation norm;
- f-divergences such as the Kullback-Leibler divergence, Renyi divergences, or similar measures;
- affine combinations or any real-valued functions of any such discrepancy measures;
- relaxations and approximations of any such discrepancy measures.

Preferably, a function is used as discrepancy measure that carries a notion of distance in the underlying space of the distributions, such as the Wasserstein distance or kernel-based measures where the kernel carries such a notion of distance (e.g., via length scales or via an intermediate embedding).

Preferably, it is possible to use relaxations and approximations of such discrepancy measures (which are again discrepancy measures). Preferably, the discrepancy can be relaxed or formulated to yield a convex or a concave function. This is advantageous as determining an upper bound or a lower bound of the output of the technical system can be obtained through an optimization problem and the arising optimization can then be solved by a convex solver. Using a convex solver can lead to a decrease in time necessary for optimization.

Preferably, the distributions referred to in the invention are modelled as weighted empirical distributions. That is, given a component and its corresponding model, each measurement input, measurement output, test input, first test output and second test output of a component, a model, or a machine learning model respectively may be assigned a weight. The weights on the measurement inputs and measurement outputs may be understood as allowing for constructing distributions out of the measurement inputs which are close enough to the test input distributions and to construct distributions out of the measurement outputs which are worst-case in the sense of achieving the desired criterion.

In a seventh step of the method, it is verified and/or validated whether the technical system fulfills the given criterion, wherein verifying and/or validating is characterized by maximizing a probability of a distribution of measurement outputs of a last component of the technical system to not fulfill the criterion with respect to the distribution of measurement outputs and under a constraint stipulating that a discrepancy of the distribution of measurement outputs and the distribution of first test outputs may not exceed the discrepancy determined in the sixth step.

In order words, as part of the seventh step a probability is determined, which can be understood as a worst-case probability of not fulfilling the criterion. In the case of using weighted empirical distributions as distributions, this is preferably achieved by maximizing the probability with respect to the weights of the weighted empirical distribution. The maximization is constrained such that a discrepancy between the distribution of measurement outputs and the distribution of first test outputs does not exceed the discrepancy determined in the sixth step.

Failing to be able to verify and/or validate the criterion may hinge on the models being used in the method to be too inaccurate to allow for a tight enough bound on the output of the model modelling the output component. A loose bound may result in failing to meet the criterion, wherein failure to meet the criterion may stem from the inaccuracy of one or multiple models with respect to their respective components, which may result in too pessimistic of a bound on the output. Thus, one or multiple models may advantageously be improved upon, i.e., they may be adapted to reflect the behavior of their respective component more accurately. This may be achieved by using the deviation as loss function and optimizing the one or multiple models such that the deviation is decreased. If the model is differentiable, this may be achieved by means of a gradient descent algorithm. Alternatively or for models that are not differentiable, evolutionary algorithms may be used for optimization.

Advantageously, an improvement of the model can lead to a tighter bound of the model corresponding to the output component and thus a more accurate assessment of the criterion. Assessing this improvement should preferably be done using measurement data (i.e., measurement inputs and measurement outputs) that were not used for improving the models as this could otherwise lead to overfitting and/or information leakage.

In any one of the aforementioned embodiments, it is further possible that components of the technical system are improved if the criterion cannot be verified and/or validated.

This may be understood as determining that the technical system cannot or is likely to not being able to satisfy the desired criterion and thus has to be improved in order to meet the desired criterion. Using the example from the powertrain, improving upon a component may for example include reducing a power of the engine to consume less fuel and thus emit less particles and/or replace a catalyst of the powertrain in order to filter out more emitted particles.

Embodiments of the invention will be discussed with reference to the following figures in more detail. The figures show:

Figure 1    a control system;

Figure 2    the control system controlling an at least partially autonomous robot;

Figure 3    the control system controlling a manufacturing machine.

Description of the embodiments

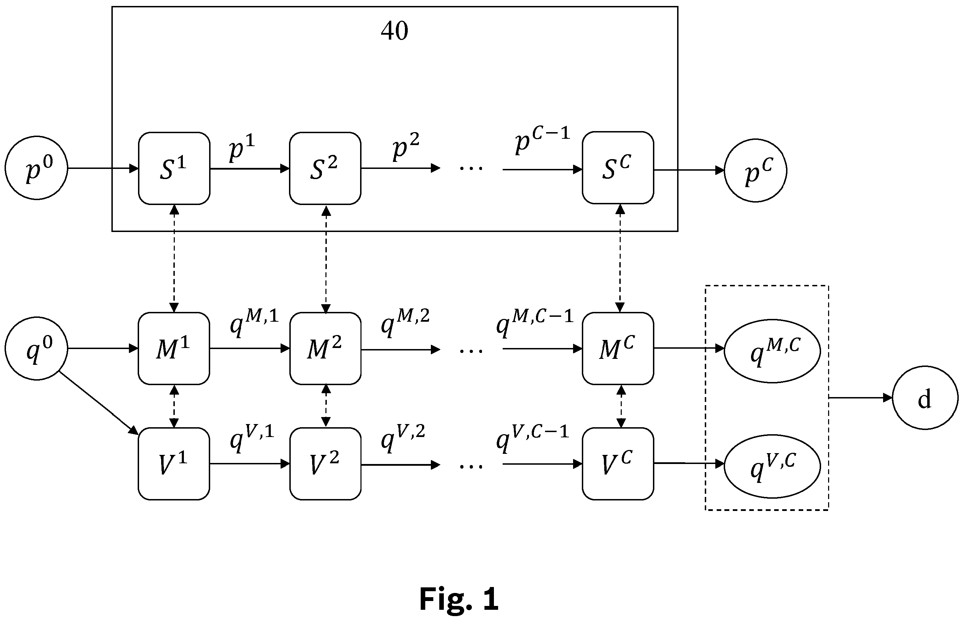

Figure 1 exemplarily shows how a control system (40) comprising a plurality of components ($S^1$,$S^2$,$C^C$) can be verified and/or validated. The control system (40) may be understood as an embodiment of the technical system referred to in this application. For each component ($S^1$,$S^2$,$S$) a respective model ($M^1$,$M^2$,$M^C$) is provided. A model ($M^1$,$M^2$,$M^C$) has a one-to-one correspondence with a component ($S^1$,$S^2$,$S^C$) indicated by a dashed arrow. For each component ($S^1$,$S^2$,$S^C$), a machine learning model ($V^1$,$V^2$,$V^C$) is further provided, wherein the machine learning model ($V^1$,$V^2$,$V^C$) corresponds to both the component ($S^1$,$S^2$,$S^C$) and the respective model ($M^1$,$M^2$,$M^C$) of the component ($S^1$,$S^2$,$S^C$). Each component ($S^1$,$S^2$,$S^C$) accepts an measurement input and provides and measurement output either to another component ($S^2$,$S^C$) or as an output of the control system (40). The machine learning models ($V^1$,$V^2$,$V^C$) are trained to predict an measurement output of their corresponding component ($S^1$,$S^2$,$S^C$) if the component ($S^1$,$S^2$,$S^C$) is provided with an measurement input.

The control system (40) comprises an input component ($S^1$), which is configured to accept input from a sensor. The sensor may preferably be part of the control system (40). The sensor provides measurement inputs to the input component. The measurement inputs (input signals) can be understood to follow a distribution ($p^0$), wherein the distribution ($p^0$) may preferably be modelled by a weighted empirical distribution. Samples for building the weighted empirical distribution can be determined by running a validation run to gather input signals. The weighted empirical distribution may then be characterized by a formula:

$$p^0 = \{(\alpha_v^0, x_v^0)\}_{v=1}^V$$

wherein $\alpha_v^0$ is a weight, $x_v^0$ is an input signal and $V$ is the number of input signals.

The control system (40) is configured to determine an output or an action based on the measurement input. For this, a measurement input is forwarded through the components. Each component thus receives a measurement input that is based on the measurement input provided to the first component but has been processed by a component of the control system (40) (unless the component is the input component). For example, the input component ($S^1$) receives the measurement input, determines some output from the measurement input and forwards the determined output to another component ($S^2$) of the control system (40). In turn, the other component ($S^2$) processes the input provided to the other component ($S^2$) and forwards its output to yet another component (not shown).

According to this chain, each component ($S^1$,$S^2$,$C^C$) receives an input (also referred to as measurement input) and provides an output (also referred to as measurement output). An output of a component ($S^1$,$S^2$,$C^C$) may be understood to follow some distribution ($p^1$,$p^2$,$p^{C-1}$,$p^C$), which can preferably be modelled by a weighted empirical distribution. Such a weighted empirical distribution may be characterized by the formula:

$$p^c = \{(\alpha_v^c, x_v^c)\}_{v=1}^V$$

wherein $\alpha_v^c$ is a weight, $x_v^c$ is a measurement output and the superscript c indicates an affiliation to a specific component ($S^1$,$S^2$,$S^C$). For example, the measurement output $x_v^2$ is a measurement output for a second component ($S^2$) based on an measurement input $x_v^1$, wherein the measurement output $x_v^2$ is determined based on a measurement output $x_v^1$ obtained from the input component ($S^1$). The measurement output $x_v^1$ may also be understood as a measurement input to the second component ($S^2$).

The output of a last component ($S^C$) of the control system (40) may be understood as the output or the action to be performed. For example, if the control system (40) is configured to determine a control signal of a robot (e.g., an at least partially autonomous vehicle), the output may characterize a high-level action to be performed by the robot (e.g., perform a lane change) or may characterize a numerical value used for controlling the robot (e.g., a steering angle position, an acceleration rate and/or a brake force). The output may be understood as being subject to verification and/or validation by the proposed method with respect to some desired criterion. Using the example of the robot, the criterion may be that any action taken by the robot may not result in the robot deviating more than a predefined allowed distance from a predefined or determined path. In further embodiments (not shown) it is also possible that the output component of the control system (40) is a "special" component that is otherwise not used when operating the control system (40) but is used for assessing the behavior of the control system (40). For example, the output component may be an emission measuring device for determining an amount of particles emitted from a component of the control system (40), e.g., in case the control system (40) is a powertrain.

There may preferably exist a validation target function that maps outputs of the output component to a real value. The validation target function may be understood as a function $V: y \rightarrow \mathbb{R}$ that maps any output y of the output component of the control system (40) to a real valued quantity. Preferably, $V(y) \in [0,1]$ can be the probability of y violating the desired criterion. As an example, $V(y) = \mathbb{1}_{y \notin spec}$ indicates whether y violates some specification spec; particularly when $y \in \mathbb{R}$ is real-valued, $V(y) = \mathbb{1}_{y > \theta}$ can indicate whether an output y exceeds some given threshold $\theta$ (such as an emission threshold). In other words, the method may be understood to determine an upper bound of a probability that a specification is not fulfilled (or the inverse, i.e., a lower bound of a probability that the specification is fulfilled).

A plurality of measurement inputs determined for the control system (40) can be considered a random sampling of a probability distribution ($p^0$). For verifying and/or validating the control system (40) a similar plurality of test inputs may be used. The test inputs may preferably be obtained synthetically by a synthesis model. Even more preferably, the test inputs may be a combination of both synthetically obtained data and measurement inputs.

When providing a test input to the chain of models and chain of machine learning systems respectively, each model and each machine learning system determines a respective output. If this is repeated for a plurality of test inputs, the outputs of the respective models and machine learning models can be considered distributions ($q^{M,0}, q^{M,1}, q^{M,C-1}, q^{M,C}, q^{V,0}, q^{V,1}, q^{M,C-1}, q^{V,C}$) about respective outputs.

A distribution ($q^{M,C}$) obtained from the last model ($M^C$) can be understood as typical predictions about the output behavior of the control system (40) as predicted by the models ($M^1, M^2, M^C$). Likewise, a distribution ($q^{V,C}$) obtained from the last machine learning model ($V^C$) can be understood as typical predictions about the output behavior of the control system (40) as predicted by the machine learning models ($V^1, V^2, V^C$). For determining the respective distribution, the same test inputs are used. That is, a test input results in a first test output as predicted by the last model ($M^C$) as well as in a second test output as predicted by the last machine learning model ($V^C$). A discrepancy between a distribution ($q^{M,C}$) of the first test outputs and a distribution ($q^{V,C}$) of the second test output can be considered a disagreement between models ($M^1, M^2, M^C$) and machine learning models ($V^1, V^2, V^C$) concerning what the control system (40) would have put out when provided the test input as input.

It should be noted here that test inputs and measurement inputs share a same structure (e.g., vectors of the same dimensionality) as well as semantic similarities (e.g., the test input and measurement input each characterize an image).

The discrepancy may then be used for assessing the verification and/or validation of the control system (40). As the distribution of measurement outputs ($p^C$) of the last component ($S^C$) of the control system (40) is a weighted empirical distribution, verification may be achieved by maximizing a probability of not fulfilling the criterion with respect to the weights. As a constraint to the maximization, it may be stipulated that the distribution obtained by maximization may not have a discrepancy from the distribution of first test outputs ($q^{M,C}$) that exceeds the previously determined discrepancy.

The criterion can then be understood as verified and/or validated if the probability determined from the maximization equals or exceeds a predefined probability threshold.

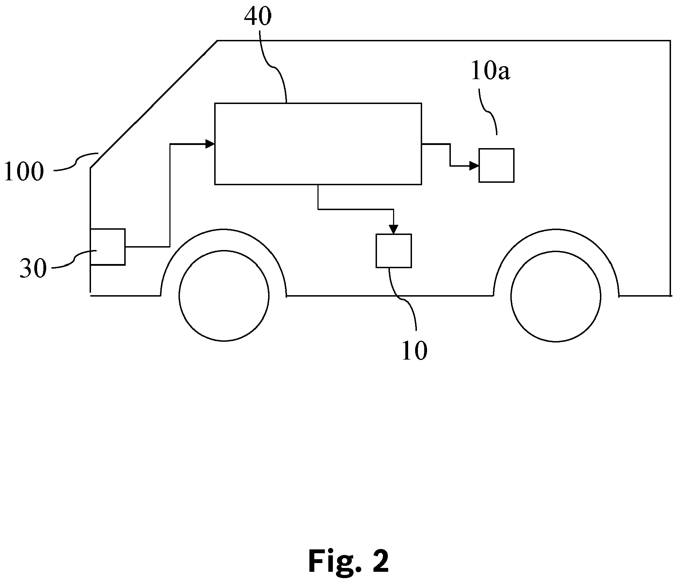

Figure 2 shows an embodiment in which the control system (40) is used to control an at least partially autonomous robot, e.g., an at least partially autonomous vehicle (100).

A sensor (30) of the vehicle (100) may comprise one or more video sensors and/or one or more radar sensors and/or one or more ultrasonic sensors and/or one or more LiDAR sensors. Some or all of these sensors are preferably but not necessarily integrated in the vehicle (100). The control system may, for example, be configured to automatically keep the vehicle (100) above a predefined distance from other objects in an environment of the vehicle (100) or have the vehicle not reduce a time to collision with vehicles in the environment below a predefined threshold. The desired criterion to be validated may, for example, be that the probability of the vehicle (100) approaching another vehicle closer than the predefined distance is below a predefined percentage threshold.

The control system (40) may preferably comprise an image classifier as a component, e.g., as input

component ($S^1$). The image classifier may be configured to detect objects in the vicinity of the at least partially autonomous robot based on input images. A measurement output of the input images may comprise an information, which characterizes where objects are located in the vicinity of the at least partially autonomous robot. A subsequent component may then determine a suitable driving path through the environment such that the predefined distance or the predefined threshold concerning the time to collision is kept to all recognized objects. A control signal may then be determined from an output component of the control system (40). The control signal may be used to control an actuator (10) of the vehicle (100). The control signal may be set to have the vehicle drive in accordance with the driving path.

The actuator (10), which is preferably integrated in the vehicle (100), may be given by a brake, a propulsion system, an engine, a powertrain, or a steering of the vehicle (100).

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, a control signal may be determined to cause the actuator (10) to spray the plants with a suitable quantity of suitable liquids and/or cut the plants.

In even further embodiments, the at least partially autonomous robot may be given by a domestic appliance (not shown), like e.g., a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal may then be determined depending on a detected material of the laundry.

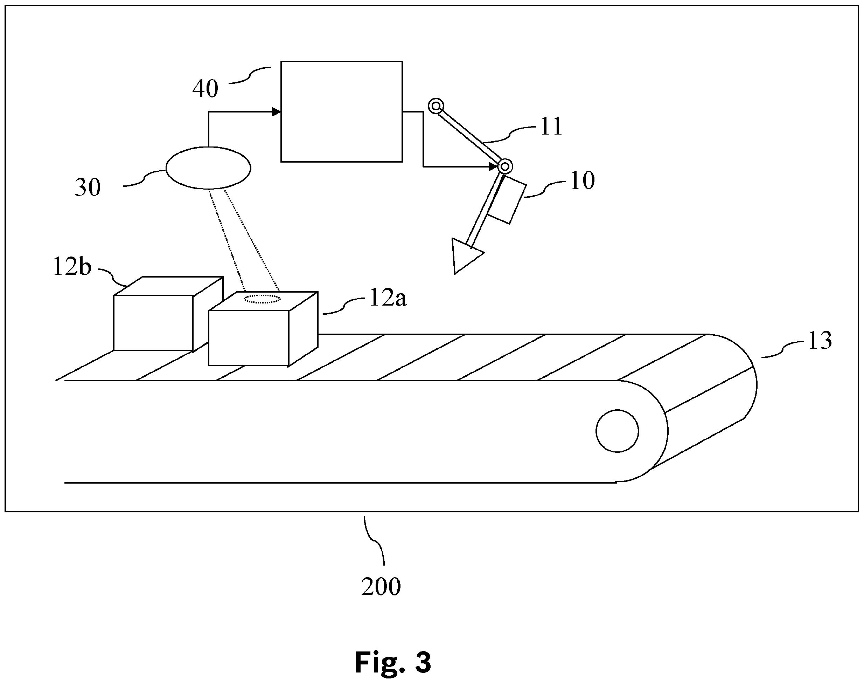

Figure 3 shows an embodiment in which the control system (40) is used to control a manufacturing machine (11), e.g., a punch cutter, a cutter, a gun drill, a welding robot, or a gripper, of a manufacturing system (200), e.g., as part of a production line. The manufacturing machine (11) may comprise a transportation device, e.g., a conveyer belt or an assembly line, which moves a manufactured product (12). The control system (40) controls an actuator (10), which in turn controls the manufacturing machine (11).

A sensor (30) used for providing measurement inputs to the control system (40) may be given by an optical sensor which captures properties of, e.g., a manufactured product (12). The control system (40) may comprise an image classifier as input component ($S^1$).

The image classifier may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut or weld the manufactured product along a specific path on the manufactured product (12). In these embodiments, the path may be determined by a component of the control system (40), wherein another component of the control system (40) then determines control signals for the actuator (10) of the manufacturing machine (11). The desired criterion may be that a cut or weld does not deviate from the planned path by more than a predefined threshold.

Alternatively, it may be envisioned that the image classifier classifies, whether the manufactured product is broken or exhibits a defect. The actuator (10) may then be controlled as to remove the manufactured product (12) from the transportation device. In this case, the desired criterion may be that the amount of manufactured products (12) that is wrongfully sorted out (e.g., products that are actually not broken or exhibit a defect but are still sorted out) is below a predefined threshold.

**Claims**

1. Method for verifying and/or validating whether a technical system (40) fulfills a desired criterion, wherein the technical system (40) emits output signals based on input signals supplied to the technical system (40), wherein the method comprises the steps of:

   a. Obtaining models ($M^1,M^2,M^C$) for a plurality of components ($S^1,S^2,S^C$) comprised by the technical system (40), wherein a connection between the obtained models characterizes which component passes which signal to which other component;
   b. Obtaining a plurality of validation measurements, wherein a validation measurement comprises a measurement input and a measurement output ($p^1,p^2,p^{C-1},p^C$), wherein the measurement output is obtained from a component ($S^1,S^2,S^C$) of the technical system (40) for the measurement input if the measurement input is provided to the component ($S^1,S^2,S^C$);
   c. For each component ($S^1,S^2,S^C$), training a machine learning model $(V^1,V^2,V^C)$ to predict measurement outputs $(p^1,p^2,p^{C-1},p^C)$ of the respective component $(S^1,S^2,S^C)$ based on inputs of the respective component, wherein at least parts of the validation measurements are used as training dataset and wherein the machine learning model $(V^1,V^2,V^C)$ corresponds to the model $(M^1,M^2,M^C)$ obtained for the component;

d. Obtaining first test outputs $(q^{M,C})$ from a last model $(M^C)$ based on test inputs $(q^0)$, wherein the first test outputs $(q^{M,C})$ are obtained by propagating the test inputs $(q^0)$ through the connection of models;

e. Determining, second test outputs $(q^{V,C})$ from the machine learning model $(V^C)$ corresponding to the last model and based on the test inputs $(q^0)$ of the models $(M^1,M^2,M^C)$, wherein the second test outputs $(q^{V,C})$ are obtained by propagating the test inputs $(q^0)$ through a connection of the machine learning models $(V^1,V^2,V^C)$, wherein the connection of the machine learning models $(V^1,V^2,V^C)$ is according to the connection of the models $(M^1,M^2,M^C)$ the respective machine learning models $(V^1,V^2,V^C)$ correspond to;

f. Determining a discrepancy $(d)$, wherein the discrepancy $(d)$ characterizes a difference between a distribution of first test outputs $(q^{M,C})$ determined from the last model $(M^C)$ and a distribution of second test outputs $(q^{V,C})$ determined by the machine learning model $(V^C)$ corresponding to the last model $(M^C)$;

g. Verifying and/or validating whether the technical system (40) fulfills the criterion, wherein verifying and/or validating is **characterized by** maximizing a probability of a distribution of measurement outputs $(p^C)$ of a last component $(S^C)$ of the technical system (40) to not fulfill the criterion with respect to the distribution of measurement outputs $(p^C)$ and under a constraint stipulating that a discrepancy of the distribution of measurement outputs $(p^C)$ and the distribution of first test outputs $(q^{M,C})$ may not exceed the discrepancy $(d)$ determined in step f.

2. Method according to claim 1, wherein the distribution of measurement outputs $(p^C)$ is **characterized by** measurement outputs $(p^C)$ obtained from the last component $(S^C)$ of the system (40) and weights assigned to the measurement outputs $(p^C)$.

3. Method according to claim 2, wherein each measurement output $(p^C)$ of the measurement outputs $(p^C)$ of the last component $(S^C)$ as assigned a weight.

4. Method according to claim 3, wherein the probability of a distribution of measurement outputs $(p^C)$ of a last component $(S^C)$ of the technical system (40) to not fulfill the criterion is determined by:

- Determining a plurality of values, wherein a value from the plurality of values characterizes a product of the weight assigned to a measurement output and a probability of the measurement output to not fulfill the criterion;
- Providing a sum of the plurality of values as the probability of the distribution of measurement outputs $(p^C)$ to not fulfill the criterion.

5. Method according to any one of the claims 1 to 4, wherein the technical system (40) is verified and/or validated to fulfill the criterion if the probability resulting from maximizing the probability of the distribution of measurement outputs $(p^C)$ is less than or equal a predefined probability threshold.

6. Method according to any one of the claims 1 to 5, wherein at least one of the machine learning models is or comprises a Gaussian process.

7. Method according to any one of the claims 1 to 6, wherein the test inputs and test outputs are determined by synthesizing inputs of the technical system (40) and forwarding the synthesized inputs through the models.

8. Method according to any one of the claims 1 to 7, wherein a model is improved if the criterion cannot be verified and/or validated.

9. Method according to any one of the claims 1 to 8, wherein at least one of the components of the technical system (40) is improved if the desired criterion cannot be verified and/or validated.

10. Method according to any one of the claims 1 to 9, wherein the technical system (40) is configured to provide a control signal to a manufacturing machine, and/or a robot.

11. Computer program that is configured to cause a computer to carry out the method according to any one of the claims 1 to 10 with all of its steps if the computer program is carried out by a processor.

12. Machine-readable storage medium on which the computer program according to claim 11 is stored.

**Fig. 1**

**Fig. 2**

EP 4 336 279 A1

EP 4 336 279 A1

**Fig. 3**

Europäisches
Patentamt

European
Patent Office

Office européen
des brevets

## DECLARATION

which under Rule 63 of the European Patent Convention shall be considered, for the purposes of subsequent proceedings, as the European search report

**Application Number**

EP 22 19 5191

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

INV.
G05B13/02
G05B13/04

In reply to the invitation to file a statement indicating the subject-matter to be searched, the Applicant provided the requested information in due time regarding the subject matter to be searched and related argumentation in support of his suggestion. In his letter of 06-04-2023 the Applicant argued that a search can be carried out because the independent claims fulfill the requirement of Article 84 EPC and furthermore the claimed invention fulfils the requirements of Article 52 EPC. However, this argumentation cannot be followed based on the following argumentation.

The arguments of the Applicant are based on the fact that validation measurements are used to train the models in claim 1, as claimed in method steps (b) and (c). The use of measurements serves, according to the Applicant, as a link between the real and the simulated system. However, in steps (d) and (e) "test inputs" are used in both models, a term which does not define what kind of data are used and for which purpose. The test inputs / outputs are contrary to applicants arguments, not claimed to be based on any technical data and certainly not related to the verification data. This statement of the applicant is only supported for test inputs as real-world data (page 10, lines 30 ? 32 and page 17, lines 15-21) wherein it also disclosed that data can be also "synthetic" or "standalone". A clear relation between verification data and test data cannot be defined. In particular, the outputs of the models cannot be considered as "indirect

-/--

| Place of search | Date | Examiner |
|---|---|---|
| The Hague | 20 April 2023 | Antonopoulos, A |

EPO FORM 1504 (P04F37)

## DECLARATION

which under Rule 63 of the European Patent Convention shall be considered, for the purposes of subsequent proceedings, as the European search report

**Europäisches Patentamt**
**European Patent Office**
**Office européen des brevets**

**Application Number**

EP 22 19 5191

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

```
      measurements", as the test data is no
      measurement at all. According to the
      description (see page 11, lines 34, 35)
      test inputs and outputs may be considered
      counterparts to the measurement inputs,
      which is a vague and unclear statement.
      Furthermore, the concept of "last model"
      in steps (d) and (e) is also unclear. This
      suggests that the models maybe connected
      in a sequence, which is not specified in
      the claim.
      Further analysis of claim 1 indicates that
      step (g.) is fully dislocated from the
      rest, as it refers again to the technical
      system. Comparing the output of the
      sequence of models and the machine
      learning models does not imply any
      technical effect on the original technical
      system. It might only be a sign for the
      quality of the models itself. No criterion
      of the technical system can be deducted
      from that.
      Finally, the claimed invention does not
      seem to sufficiently disclosed. According
      to T0161/18, T0702/20 and T1191/19, the
      relation between training data and output
      of the neural network in respect of a
      technical effect must be defined and
      sufficiently disclosed. The broad
      formulation of claim 1 and the description
      failing to provide more details, renders
      highly unclear how such a technical effect
      may be achieved. The "criterion" of the
      technical system must be directly linked
      to the input data of the machine learning
      model. However, the machine learning model
      is only linked, if at all, to the models
      of the components (and only by the
      measurement data). No link to the actual
                                    -/--
```

| Place of search | Date | Examiner |
|---|---|---|
| **The Hague** | **20 April 2023** | **Antonopoulos, A** |

EPO FORM 1504 (P04F37)

3

Europäisches
Patentamt

European
Patent Office

Office européen
des brevets

# DECLARATION

**Application Number**

which under Rule 63 of the European Patent Convention shall be considered, for the purposes of subsequent proceedings, as the European search report

**EP 22 19 5191**

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|
| Reason:<br><br>components is present.<br>It is to be noted that any opinion concerning Article 52 EPC can only be provided when a search can and has been performed, i.e., the claims, with due respect of the description, are technically clear enough to perform a reasonable search.<br>Based on the above argumentation, a meaningful search for the subject matter of independent claims 1,11 and 12 cannot be performed.<br>The request in the letter relating to a personal contact with the Applicant cannot be granted as it is not legally possible at this point of the procedure.<br>The applicant's attention is drawn to the fact that the application will be further prosecuted on the basis of subject-matter for which a search has been carried out and that the claims should be limited to that subject-matter at a later stage of the proceedings (Rule 63(3) EPC).<br><br>The applicant's attention is drawn to the fact that a search may be carried out during examination following a declaration of no search under Rule 63 EPC, should the problems which led to the declaration being issued be overcome (see EPC Guideline C-IV, 7.2). | |

| Place of search | Date | Examiner |
|---|---|---|
| The Hague | 20 April 2023 | Antonopoulos, A |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHALEV-SHWARTZ et al.** *On a Formal Model of Safe and Scalable Self-driving Cars,* 2018, https://arxiv.org/pdf/1708.06374.pdf
- **DANQUAH et al.** *Statistical Validation Framework for Automotive Vehicle Simulations Using Uncertainty Learning,* 2021, https://doi.org/10.3390/app11051983

- **JIANG et al.** Assessing Generalization of SGD via Disagreement. *ICLR 2022,* 2021, https://arxiv.org/abs/2106.13799